# EUROPEAN PATENT SPECIFICATION

(11) **EP 1 852 628 B1**
(45) Date of publication and mention of the grant of the patent: **22.07.2009**
(21) Application number: 07251869.9
(22) Date of filing: 04.05.2007
(51) Int. Cl.: F16D 66/02, F16D 65/38

(54) **Disc brake wear adjuster**
Scheibenbremsenverschleißsteller
Dispositif d'ajustement de l'usure d'un frein à disque

(30) Priority: 05.05.2006 GB 0608956
(43) Date of publication of application: 07.11.2007
(73) Proprietor: Meritor Heavy Vehicle Braking Systems (UK) Limited, Cwmbran, Gwent NP44 3XU (GB)
(72) Inventor: Niehorster, Keith, Swansea South Glamorgan SA2 9EJ (GB); Taylor, Martin Pors, Cwmbran Torfaen NP44 3ND (GB); Roberts, Paul, Newport NP20 5QU (GB)
(74) Representative: Jones, John Bryn

(56) References cited:
- EP-A- 1 596 092
- WO-A-95/09991
- WO-A-97/29298
- WO-A-20/04111484

## Description

This invention relates to a wear adjuster of a disc brake, particularly a disc brake of the air actuated kind.

Disc brakes, as are well known, comprise a rotor and a brake caliper which straddles the rotor and can be actuated to apply a braking force thereto via opposed brake pads. In commercial vehicles air actuation is almost universal, and an air actuator is provided at each vehicle wheel to actuate a brake caliper mechanically via a lever.

It is not generally practicable to arrange the actuating mechanism at the outboard side of the rotor, and thus the relevant components are always at the inboard side. Particularly with vehicles having smaller wheels such inboard mounting is rather space consuming, so that design freedom of suspension and steering components may be compromised. Furthermore, the provision of additional features such as wear sensors may be problematic.

In one conventional design, the actuating mechanism comprises an inboard tappet operable to apply the inboard brake pad directly, an automatic wear adjuster at one side of the tappet, a manual wear adjuster at the other side of the tappet, and a wear sensor having an electrical output indicative of brake pad and rotor wear. In addition to physically locating these components in the brake caliper, each must also be sealed against moisture and dirt to avoid corrosion and/or seizure.

EP-A-1596092, in the name of the present applicants proposes a rotary wear indicator mounted on a manual wear adjuster mechanism, and having a visual output for giving an indication of pad wear to a mechanic. The wear indicator is removed for de-adjustment of the adjuster mechanism (for example to replace worn brake pads) and must be re-set upon replacement.

WO 97/29298 proposes a wear indicator positioned adjacent to a deadjuster mechanism.

What is required is a wear adjuster/wear indicator which is adapted to replacement or adjustment of brake pads without the requirement for re-setting or calibrating.

According to the invention there is provided an assembly according to claim 1 and a method according to claim 23.

The adjuster and indicator are coaxial thus minimising the space occupied and permitting direct abutment between the adjuster and the indicator.

In the preferred embodiment the assembly further includes a bolt screw-threaded in said sleeve at the opposite end to said body, said bolt being adapted to be restrained against rotation and having a head engaged by said plunger.

In such an arrangement rotation of the sleeve as a consequence of incremental wear adjustment causes axial movement of the bolt due to the screw-threaded connection, and hence relative movement of the plunger on said axis. The wear sensor may for example be a linear transducer having an output indicative of the relative extension of the plunger. The output is preferably electrical and adapted to be directly proportional to movement of the incremental wear adjuster.

Preferably the wear sensor comprises a cylindrical body from which said plunger protrudes, and which is inserted at least partially in said sleeve.

In a preferred embodiment the bolt is tubular and internally screw-threaded to receive a separate head protruding on the plunger side for contact therewith.

In such an arrangement the initial relative position of the plunger may be set by screwing the head relative to the bolt. Thereafter no further adjustment of the head is required in the event that the wear sensor is removed to permit rotation of the adjuster sleeve, for example for de-adjustment of the usual tappet.

Preferably the means of turning the sleeve comprises an internal discontinuity engageable by a turning tool inserted via the mouth of the sleeve. Alternatively a slot at the mouth may be provided.

Other features of the invention will be apparent from the following description of a preferred embodiment illustrated by way of example only in the accompanying drawings in which:
Fig.1 illustrates in schematic plan a conventional disc brake installation of a commercial vehicle.
Fig.2 is a schematic axial section through a combined adjuster/wear sensor according to the invention.

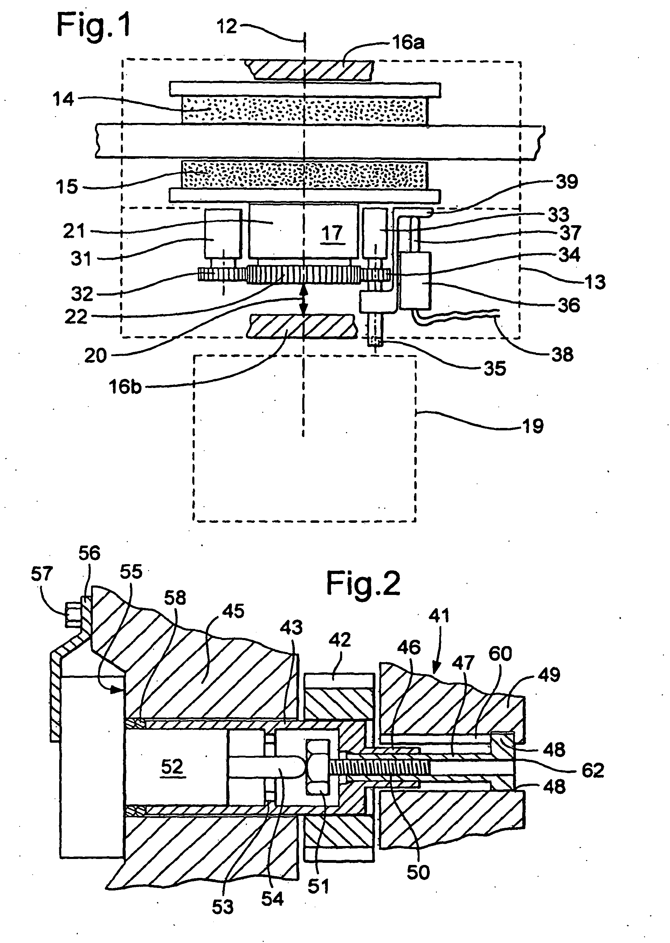

A conventional air actuated brake caliper installation is illustrated schematically in Fig.1.

A brake rotor 11 has an axis of revolution 12. Bridging the rotor is a brake caliper body 13 (dotted outline) comprising a fixed part mounted on the vehicle axle/stub axle and a sliding (bridge) part adapted to transfer braking forces from the inboard side to the outboard side of the rotor 11.

Brake pads 14,15 are arranged on either side of the rotor 11, the outboard pad 14 being actuated by an outboard member 16a of the sliding part. The inboard pad 15 is actuated via a tappet assembly 17 slidable in the sliding part and reacting against an inboard member 16b of the sliding part.

A brake actuator 19 acts via a conventional operating lever (not shown) to urge apart the tappet assembly 17 and inboard member 16b (as represented by arrow 20), thus directly applying the inboard pad 15 to the rotor 11, and via the outboard member 16a indirectly applying the outboard pad 14 to the rotor 11.

The tappet assembly 17 comprises a cylindrical tappet 21 internally threaded and slidable in the caliper body but not relatively rotatable, and an adjuster wheel 22 screw threaded thereto. The wheel is toothed externally as illustrated, and relative rotation thereof results in an increase or reduction in the axial length of the tappet assembly.

The brake caliper includes several additional components on the inboard side. A wear adjuster comprises a body 31 mounted in the caliper sliding part and having a relatively rotatable toothed output wheel 32 in mesh with the adjuster wheel 22. The output wheel 32 moves unidirectionally in operation (typically by virtue of a wrap spring or roller clutch) and the wear adjuster is actuated by an arm of the operating lever (not shown) which causes the separation indicated by arrow 20.

Accordingly the adjuster 22 can be rotated by the output wheel 32 to increase the length of the tappet assembly 17 so as to compensate for wear of the brake pads 14, 15, and rotor 11. Such an arrangement is well known and need not be further described here.

On the opposite side of the tappet assembly is provided a manual adjuster comprising shaft 34a which incorporates an adjuster wheel 34 in mesh with the

adjuster wheel 22. The shaft 34a extends axially on the inboard side, and terminates in a head 35 adapted to receive a turning tool. Any suitable head form may be provided (internal or external) such that application of a turning tool, such as a socket spanner, can rotate the de-adjuster wheel 34 to permit a reduction in length of the tappet assembly 17 for fitting of replacement brake pads. It will be appreciated that the wear adjuster may need to be deactivated to permit de-adjustment, and that the de-adjuster may be used in reverse for setting an initial pad/ rotor clearance after pad replacement.

Also mounted in the sliding part of the caliper body is an electronic wear sensor comprising a fixed body 36 and a resiliently biased plunger 37. The plunger 37 bears against a cranked arm 39 which is screw-threaded to the shaft 34a. As the pads wear, the adjuster wheel 22 is rotated, and consequently the manual wheel 34. As a result the cranked arm 39 moves in the direction of axis 12 and hence alters the extension of the plunger 37 with respect to the body 36, thus giving a changing electrical output via leads 38. The wear sensor may for example include a linear potentiometer giving an output voltage proportional to plunger extension.

The pitch of the screw thread between the cranked arm 39 and the shaft 34a may be different from that of the tappet assembly 17, so as to give a desired output signal from the wear sensor. Such an arrangement is known and need not be further described here.

Fig.2 illustrates an embodiment of the invention. A combined wear adjuster/wear sensor 41 includes a toothed adjuster wheel 42 for mesh with a tappet adjuster wheel 22. Wheel 42 is equivalent to de-adjuster wheel 34 of Fig.1.

A tubular body 43 (also referred to as a sleeve) is fast within wheel 42 and extends to the inboard side; the body 43 can rotate with the wheel 42 within a support defined by the caliper bridge 45.

A cylindrical extension 46 of the body 43 projects towards the outboard side and has a screw threaded interior to receive a screw-threaded sleeve 47. The outboard end of the sleeve has a projection 48 for non-rotational but axially slidable engagement with respect to the brake housing 49, via a keyway 60. The sleeve 47 is also screw threaded on the inside to receive a setting bolt 50 having a head 51 at the inboard side. The assembled screw threaded sleeve 47 and bolt 50 form a contact member 62. A cylindrical wear sensor 52 enters within the tubular body 43 and is in axial abutment with an outer face 55 of the bridge 45; the sensor 52 is retained by a bracket 56 and set screw 57. O-rings 58 provide a seal between the sensor and bridge to prevent ingress of moisture. The wear sensor 52 has a spring biased plunger 54 in contact with the head 51, as illustrated.

The tubular body 43 has an internal hex 53 which is axially spaced from the body of the wear sensor 52.

In use the setting bolt 50 is located at a suitable projection from the sleeve 47 according to the length of the tappet assembly 17. This initial setting step plays no part in function of the combined adjuster/wear indicator, and thereafter the bolt 50 and sleeve 47 may be considered as a unitary contact member 62. In some circumstances the bolt 50 may be omitted, so that the plunger 54 bears directly on a suitably shaped end of the sleeve 47, which in that circumstance would form the contact member 62 alone.

In use, and with reference to Fig.1, progressive wear of the brake pads will cause relative rotation of the tappet adjuster wheel 22 by the adjuster input wheel 32. As a consequence of tooth meshing, the adjuster wheel 42 will rotate. The sleeve 47 is however fixed against rotation with respect to the caliper body 49, and accordingly will move relatively to the left (as viewed) with respect to the tubular body 43. As a consequence the plunger 54 will be pushed inwardly of the body of the wear sensor, thus changing the output thereof.

It will be appreciated that the plunger 54 moves into the wear sensor 52, and as it does so the output from the wear sensor 52 changes to continuously indicate an amount of wear. By utilising continuous indication, the wear indicator 52 produces a signal indicating the amount of wear rather than a condition for replacement (i.e. binary indication). This may be achieved, for example, with a variable resistor actuated by the plunger 54.

As in the prior art the sleeve 47 and body 43 may move at a different relative rate to the tappet 21 and adjuster wheel 22, so as to provide a desirable output range of the wear sensor 52 which is a direct indication of wear of the brake pads and rotor. An exact linear relationship is not however a requirement of the invention provided that the effective stroke of the plunger can be related to the wearing thickness of the brake pads and rotor.

Output from wear sensor 52 is via a twisted wire pair, but other arrangements are possible. For example power, ground and signal wires may be provided.

When the brake pads are fully worn, and due for replacement, the wear sensor 52 is removed by releasing the screw 57, and a hex key is applied to the internal hex 53 to wind the tappet 21 inwards with respect to the adjuster wheel 22, at the same time screwing the sleeve 47 to the right with respect to the housing 49. After turning to the desired degree which permits pad replacement, the hex 53 may be wound in the opposite direction to set initial pad/rotor clearance. Thereafter the wear sensor 52 is inserted up to the abutment face 55, and the plunger will extend under resilient loading to the bolt head 51 (at maximum extension).

The hex 53 may be provided at a different axial location, or may be substituted by some other suitable discontinuity - for example a slot in the end of tubular body 43 - which is adapted to receive a turning tool.

It will be appreciated that removal and replacement of the sensor 52 does not change the relative position of the plunger having regard to brake pad thickness. Accordingly the plunger will adopt an appropriate extension without further setting measures, and thus a mechanic merely removes the sensor to rotate the body 43, and then replaces the sensor. Non-replacement of the sensor may be sensed by the plunger being at maximum extension, and accordingly starting of the vehicle engine may be inhibited.

It will therefore be appreciated that advantageously the plunger is continuously in contact with said sleeve during operation of the assembly during operation. "Operation" is defined as the situation in which the wear sensor is installed on the brake, and as such is capable of indicating the brake wear.

## Claims

1. An assembly (41) of a wear de-adjuster and wear indicator of a brake caliper, said de-adjuster having an axis of rotation and comprising a sleeve (43) rotatable about said axis, **characterised in that** said indicator comprises a body (52) at one end of said sleeve (43), and a plunger (54) movable relative to said body on said axis, wherein said plunger is located within said sleeve (43).

2. An assembly according to claim 1 wherein said sleeve (43) is rotatable with respect to said body.

3. An assembly according to claim 1 or claim 2 wherein said sleeve (43) includes a discontinuity (53) adapted to receive a turning tool on said axis for de-adjustment.

4. An assembly according to claim 3 wherein said discontinuity (53) is internal.

5. An assembly according to claim 3 wherein said discontinuity (53) is at the end of said sleeve adjacent said body.

6. An assembly according to any preceding claim wherein a portion of said body (52) is inserted into said sleeve.

7. An assembly according to any preceding claim and further including a contact member (62), wherein the contact member is axially movable relative to the sleeve, and the plunger contacts the contact member.

8. An assembly according to claim 7 in which the contact member is rotatably fixed.

9. An assembly according to claim 8 in which the contact member has an external thread and said external thread is in contact with the sleeve, wherein rotation of the sleeve causes axial movement of the contact member.

10. An assembly according to claim 9 in which the contact member is at the opposite end of the sleeve to said body.

11. An assembly according to any of claims 7 to 10 in which the contact member is extendable.

12. An assembly according to claim 11 in which the contact member comprises an internally threaded sleeve (47) and an externally threaded bolt (50).

13. An assembly according to any preceding claim in which the plunger is biased to an extended position relative to said body.

14. An assembly according to any preceding claim in which the wear indicator is electrical.

15. An assembly according to any preceding claim configured to be mounted directly to a disc brake caliper.

16. An assembly according to any preceding claim in which the wear indicator continuously indicates an amount of wear.

17. An assembly according to claim 16 further comprising a variable resistor actuated by the plunger.

18. An assembly according to any of claims 7 to 12 in which the plunger is continuously in contact with said contact member during operation of the assembly.

19. An assembly according to any preceding claim in which the body is fixed such that it is constrained from movement relative to, and along, said axis.

20. A brake caliper having an assembly according to any preceding claim.

21. A brake caliper having an assembly according to any of claims 7 to 12, said sleeve being rotatable in said caliper and restrained from movement along said axis, and said contact member being keyed to said caliper for movement along said axis.

22. A brake caliper according to claim 21 wherein said body is engaged therewith against rotation and axial movement with respect to said axis.

23. A method of deadjusting an assembly according to any of claims 1 to 19, the method comprising the step of:
removing the wear indicator to permit rotation of the sleeve for deadjustment of the brake caliper.

## Patentansprüche

1. Anordnung (41) aus einem Verschleiß-Entjustierer und einer Verschleißanzeige eines Bremssattels, wobei der Entjustierer eine Drehachse aufweist und eine um die Achse drehbare Hülse (43) umfasst, **dadurch gekennzeichnet, dass** die Anzeige einen Körper (52) an einem Ende der Hülse (43) und einen Kolben (54) umfasst, der bezüglich des Körpers auf der Achse beweglich ist, wobei der Kolben in der Hülse (43) angeordnet ist.

2. Anordnung nach Anspruch 1, wobei die Hülse (43) bezüglich des Körpers drehbar ist.

3. Anordnung nach Anspruch 1 oder 2, wobei die Hülse (43) eine Diskontinuität (53) aufweist, die dazu ausgeführt ist, ein Drehwerkzeug auf der Achse zur Entjustierung aufzunehmen.

4. Anordnung nach Anspruch 3, wobei sich die Diskontinuität (53) innen befindet.

5. Anordnung nach Anspruch 3, wobei sich die Diskontinuität (53) am Ende der Hülse neben dem Körper befindet.

6. Anordnung nach einem vorhergehenden Anspruch, wobei ein Teil des Körpers (52) in der Hülse eingeführt ist.

7. Anordnung nach einem vorhergehenden Anspruch, die weiterhin ein Kontaktglied (62) enthält, wobei das Kontaktglied bezüglich der Hülse axial beweglich ist und der Kolben das Kontaktglied berührt.

8. Anordnung nach Anspruch 7, wobei das Kontaktglied drehbar befestigt ist.

9. Anordnung nach Anspruch 8, wobei das Kontaktglied ein Außengewinde aufweist und das Außengewinde mit der Hülse in Kontakt steht, wobei die Drehung der Hülse eine Axialbewegung des Kontaktglieds verursacht.

10. Anordnung nach Anspruch 9, wobei sich das Kontaktglied am gegenüberliegenden Ende der Hülse bezüglich des Körpers befindet.

11. Anordnung nach einem der Ansprüche 7 bis 10, wobei das Kontaktglied ausziehbar ist.

12. Anordnung nach Anspruch 11, wobei das Kontaktglied eine ein Innengewinde aufweisende Hülse (47) und eine ein Außengewinde aufweisende Schraube (50) umfasst.

13. Anordnung nach einem vorhergehenden Anspruch, wobei der Kolben in eine ausgezogene Position bezüglich des Körpers vorgespannt ist.

14. Anordnung nach einem vorhergehenden Anspruch, wobei die Verschleißanzeige elektrisch ist.

15. Anordnung nach einem vorhergehenden Anspruch, die dazu konfiguriert ist, direkt an einen Scheibenbremssattel angebracht zu werden.

16. Anordnung nach einem vorhergehenden Anspruch, wobei die Verschleißanzeige kontinuierlich ein Verschleißausmaß anzeigt.

17. Anordnung nach Anspruch 16, die weiterhin einen Stellwiderstand umfasst, der durch den Kolben betätigt wird.

18. Anordnung nach einem der Ansprüche 7 bis 12, wobei der Kolben während des Betriebs der Anordnung ständig mit dem Kontaktglied in Kontakt steht.

19. Anordnung nach einem vorhergehenden Anspruch, wobei der Körper so befestigt ist, dass er an einer Bewegung relativ zur Achse und daran entlang gehindert wird.

20. Bremssattel mit einer Anordnung nach einem vorhergehenden Anspruch.

21. Bremssattel mit einer Anordnung nach einem der Ansprüche 7 bis 12, wobei die Hülse in dem Sattel drehbar ist und an einer Bewegung entlang der Achse gehindert wird und das Kontaktglied mit dem Sattel zur Bewegung entlang der Achse verkeilt ist.

22. Bremssattel nach Anspruch 21, wobei der Körper damit gegen Drehung und Axialbewegung bezüglich der Achse in Eingriff steht.

23. Verfahren zur Entjustierung einer Anordnung nach einem der Ansprüche 1 bis 19, wobei das Verfahren den folgenden Schritt umfasst:
Entfernen der Verschleißanzeige, um eine Drehung der Hülse zur Entjustierung des Bremssattels zu gestatten.

## Revendications

1. Ensemble (41) constitué d'un dispositif de rattrapage d'usure et d'un témoin d'usure d'un étrier de frein, ledit dispositif de rattrapage comportant un axe de rotation et comprenant un manchon (43) pouvant tourner autour dudit axe, **caractérisé en ce que** ledit témoin comprend un corps (52) à une extrémité dudit manchon (43) et un poussoir (54) mobile par rapport audit corps sur ledit axe, dans lequel ledit poussoir est situé à l'intérieur dudit manchon (43).

2. Ensemble selon la revendication 1, dans lequel ledit manchon (43) peut tourner par rapport audit corps.

3. Ensemble selon la revendication 1 ou 2, dans lequel ledit manchon (43) comprend une discontinuité (53) apte à recevoir un outil tournant sur ledit axe pour le rattrapage.

4. Ensemble selon la revendication 3, dans lequel ladite discontinuité (53) est interne.

5. Ensemble selon la revendication 3, dans lequel ladite discontinuité (53) est à l'extrémité dudit manchon qui jouxte ledit corps.

6. Ensemble selon l'une quelconque des revendications précédentes, dans lequel une partie dudit corps (52) est inséré dans ledit manchon.

7. Ensemble selon l'une quelconque des revendications précédentes, comprenant en outre un élément de contact (62) et dans lequel l'élément de contact est mobile axialement par rapport au manchon et le poussoir est en contact avec l'élément de contact.

8. Ensemble selon la revendication 7, dans lequel l'élément de contact est fixe en rotation.

9. Ensemble selon la revendication 8, dans lequel l'élément de contact comporte un filetage externe et ledit filetage externe est en contact avec le manchon et dans lequel la rotation du manchon provoque un mouvement axial de l'élément de contact.

10. Ensemble selon la revendication 9, dans lequel l'élément de contact est à l'extrémité opposée du manchon par rapport audit corps.

11. Ensemble selon l'une quelconque des revendications 7 à 10, dans lequel l'élément de contact est extensible.

12. Ensemble selon la revendication 11, dans lequel l'élément de contact comprend un manchon (47) fileté intérieurement et un boulon (50) fileté extérieurement.

13. Ensemble selon l'une quelconque des revendications précédentes, dans lequel le poussoir est rappelé vers une position « sorti » par rapport audit corps.

14. Ensemble selon l'une quelconque des revendications précédentes, dans lequel le témoin d'usure est électrique.

15. Ensemble selon l'une quelconque des revendications précédentes, configuré pour être monté directement sur un étrier de frein à disque.

16. Ensemble selon l'une quelconque des revendications précédentes, dans lequel le témoin d'usure indique en continu la valeur de l'usure.

17. Ensemble selon la revendication 16, comprenant en outre une résistance variable actionnée par le poussoir.

18. Ensemble selon l'une quelconque des revendications 7 à 12, dans lequel le poussoir est continuellement en contact avec ledit élément de contact pendant le fonctionnement de l'ensemble.

19. Ensemble selon l'une quelconque des revendications précédentes, dans lequel le corps est fixé de telle sorte qu'il est limité dans ses mouvements par rapport audit axe et le long de celui-ci.

20. Étrier de frein comportant un ensemble selon l'une quelconque des revendications précédentes.

21. Étrier de frein comportant un ensemble selon l'une quelconque des revendications 7 à 12, dans lequel ledit manchon peut tourner dans ledit étrier et est limité dans ses mouvements le long dudit axe et dans lequel ledit élément de contact est claveté sur ledit étrier pour un mouvement le long dudit axe.

22. Étrier de frein selon la revendication 21, dans lequel ledit corps est enclenché avec lui pour empêcher les mouvements de rotation et axial par rapport audit axe.

23. Procédé de re-réglage d'un ensemble selon l'une quelconque des revendications 1 à 19, le procédé comprenant l'étape consistant à : retirer le témoin d'usure pour permettre la rotation du manchon afin de refaire le réglage de l'étrier de frein.
